## Europäisches Patentamt
## European Patent Office
## Office européen des brevets

(11) Numéro de publication: **0 168 303**
**B1**

(12) **FASCICULE DE BREVET EUROPÉEN**

(19)

(45) Date de publication du fascicule du brevet:
25.01.89

(21) Numéro de dépôt: **85401205.1**

(22) Date de dépôt: **18.06.85**

(51) Int. Cl.⁴: **F 16 D 66/02,** G 01 D 5/20

(54) **Dispositif de détection de position ou d'usure d'organes.**

(30) Priorité: **19.06.84 FR 8409553**

(43) Date de publication de la demande:
**15.01.86 Bulletin 86/3**

(45) Mention de la délivrance du brevet:
**25.01.89 Bulletin 89/4**

(84) Etats contractants désignés:
**DE GB IT SE**

(56) Documents cité:
**EP-A-0 082 772
DE-A-2 118 875
US-A-4 280 594
US-A-4 334 428
US-A-4 345 672**

(73) Titulaire: **REGIE NATIONALE DES USINES RENAULT, Boîte postale 103 8-10 avenue Emile Zola, F-92109 Boulogne- Billancourt (FR)**

(72) Inventeur: **Lombard, Claude, 60, rue Corneille, F-78150 Le Chesnay (FR)**
Inventeur: **Hannoyer, Gilles, Les Clos du Bel Air Rue Taillevent, F-78100 Saint Germain en Laye (FR)**
Inventeur: **Labaune, Camille, 8, rue du 4 Septembre, F-78112 Fourqueux (FR)**
Inventeur: **Lefèvre, Eric, 1, Place Racine, F-92100 Boulogne Billancourt (FR)**
Inventeur: **Bellard, Jean- Pierre, 12, Allée de la Sablière, F-78170 La Celle Saint Cloud (FR)**

(74) Mandataire: **Saint Martin, René, Régie Nationale des Usines Renault Direction des Recherches et Développements Service 0604 8-10, Avenue Emile- Zola, F-92109 Boulogne Billancourt Cedex (FR)**

LIBER, STOCKHOLM 1989

## Description

La présente invention a pour objet un dispositif de détection de la position d'une pièce mécanique par rapport à une autre. Elle s'applique plus particulièrement au cas où les mouvements sont relativement lents et les prix à atteindre très bas dans un environnement électromagnétique perturbateur.

C'est le cas sur véhicule automobile ou engin pour la détection de l'usure d'organes et notament de garnitures de frein.

La solution usuellement adoptée est un plot métallique temoin noyé dans la garniture. Lorsque celle-ci est usée, un contact électrique s'établit entre le plot et la surface métallique de frottement du disque ou du tambour ce qui permet l'allumage d'une lampe témoin au tableau de bord.

La publication FR-A-0 082 772 décrit un dispositif de vérificaion de l'état interne d'un tube au moyen d'une sonde à palpeurs radiaux respectivement constitués par un organe monté à mobilité dans un tube réalisé en un matériau non magnétique monté sur le cops de la sonde.

La publicution US-A-4 345 672 décrit un dispostif de vérification d'usure d'organes de freinage dans lequel un détecteur de l'état d'usure limite agit en réponse de la pression de freinage.

Des perfectionnements ont été apportés à ce dispositf et notamment, le remplacement du contact par une résistance consommable.

L'accrossement de complexité ne s'étant pas en général révélé payant, ces dispositifs n'ont été que peu appliqués.

Le dispositif objet de la présente demande, échappe aux inconvénients précités et permet une mesure progressive de la position de pièces mécaniques et notamment des patins portant les garnitures de frein par rapport à la surface de frottement. Son domaine d'application n'est cependant pas limité aux freins car les performances obtenues permettent d'envisager son application à d'autres domaines de mesure de position ou de mouvement avec des besoins de précision plus élevés.

Ce dispositif se compose de deux parties qui peuvent être relativement éloignées l'une de l'autre et reliées par une connexion électrique à deux fils ne nécessitant pas en général un blindage. L'un des fils peut être remplacé par une masse commune.

La partie située près des organes à mesurer se compose d'un noyau magnétique à faibles pertes et à faible coefficient de température pénétrant plus ou moins profondément dans une bobine à petit nombre de spires suivant la position relative des pièces.

L'autre partie est constituée par un circuit électronique permettant d'envoyer à intervalles choisis un courant dans la bobine, de le couper après stabilisation et de recueillir dans un condensateur l'énergie précédemment emmagasinée dans la bobine, la mesure de cette énergie étant caractéristique de la position des pièces.

Cette disposition permet de ne faire circuler dans la ligne que des courants suffisamment lentement variables pour ne pas être perturbateurs pour l'environnement et cependant suffisamment concentrés dans le temps et d'une énergie suffisante pour ne pas être perturbés par le niveau général électromagnétique du même environnement.

L'invention sera maintenant décrite en se référant aux figures annexées.

La figure 1 est un schéma électrique de principe d'un dispositif selon une première forme de l'invention avec mesure de tension.

La figure 2 représente l'évolution en fonction du temps des tensions et courants en différents points du schéma figure 1.

La figure 3 montre comment varie la tension recueillie en fonction du déplacement du noyau.

La figure 4 est un schéma électrique de principe correspondant à une deuxième forme de l'invention, avec mesure du temps de décharge du condensateur.

La figure 5 représente l'évolution en fonction du temps des tensions et courants en différents points du schéma figure 4.

La figure 6 est un exemple de réalisation mécanique d'une mesure d'usure de garniture de freins à disques d'un véhicule automobile.

Les figures 7 et 8 sont d'autres exemples de réalisation ayant le même objet mais avec intégration plus poussée du moyen de mesure aux parties mécaniques du frein.

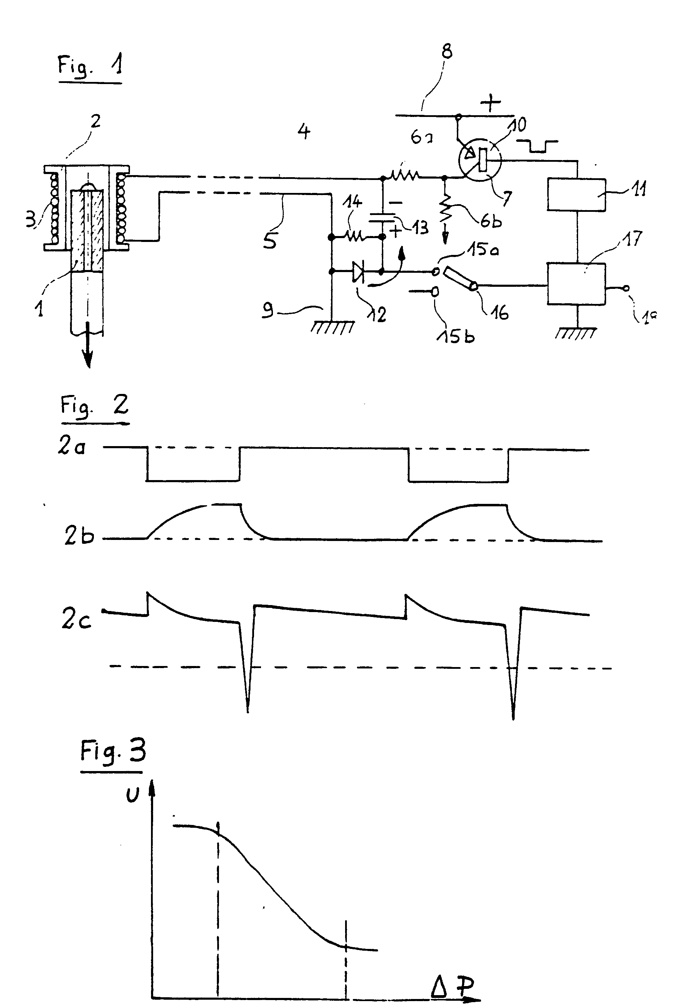

Sur la figure 1 on peut distinguer un noyau magnétique mobile 1 pénétrant dans le support 2 d'une bobine allongée 3 ayant peu de couches de fil pour assurer un bon couplage avec le noyau. Cette bobine est connectée par 2 fils 4 et 5 d'une part, à travers une résistance 6a et un transistor PNP 7 à une ligne d'alimentation continue 8 par rapport à la masse commune 9 et d'autre part, à cette même masse.

La base 10 du transistor 7 est contrôlée par un circuit de commande 11 qui envoie périodiquement à la base 13 des ordres de conduction.

Entre la masse 9 et la résistance 6a se trouvent en série une diode 12 et un condensateur 13, la cathode tournée vers le condensateur. Une résistance de décharge lente 14 est placée en parallèle sur la diode 12. La cathode de la diode 12 est reliée à un commutateur électronique 16 pouvant faire contact sur les plots 15a, 15b qui sont ainsi mis successivement en liaison avec l'appareil indicateur 17 dont la sortie d'information est 18. Cet appareil 17 est d'un type quelconque sensible à un niveau de tension.

Une résistance 6b peut alimenter au moins une autre bobine de détection dont la diode aboutit en 15b pour la détection de l'usure d'autres garnitures de frein.

Le fonctionnement sera maintenant décrit avec l'aide de la figure 2.

Initialement, un ordre de conduction est envoyé au transistor 7 par le circuit de commande 11 comme indiqué sur la courbe 2a. Après un certain délai, le courant dans la bobine 2 atteint sa valeur asymptotique limitée per la résistance 6a de forte valeur et la résistance ohmique de la bobine 3.

A la coupure du transistor 7, le courant de la bobine trouve un chemin provisoire à travers la diode 12 et le condensateur 13. Celui-ci reste chargé comme montré sur la figure 2c et se décharge lentement dans la résistance 14. Lors d'une nouvelle mise en conduction, il apparaît un pic temporaire égal à la tension d'alimentation de la ligne 8.

La tension recueillie aux bornes du condensateur 13, immédiatement après la charge, est proportionnelle à la racine carrée de l'inductance de la bobine 3. Cette inductance dépend de la position du noyau magnétique 1 ce qui permet la mesure de la position relative du noyau 1 par rapport à la bobine 3 par l'indicateur 17. La figure 3 montre la variation de la tension de charge du condensateur 13 en fonction de la position du noyau 1 dans la bobine 3.

Par un choix correct des valeurs et des matériaux et notamment en choisissant une grande valeur pour la résistance fia vis-à-vis de la valeur de la résistance de la bobine 3 les variations de tension en fonction de la température peuvent être rendues très faibles. Le noyau 1 est avantageusement en matériau à faibles pertes comme par exemple, en ferrite de baryum ou équivalent.

La résistance série 6a peut être remplacée le cas échéant, par un générateur de courant.

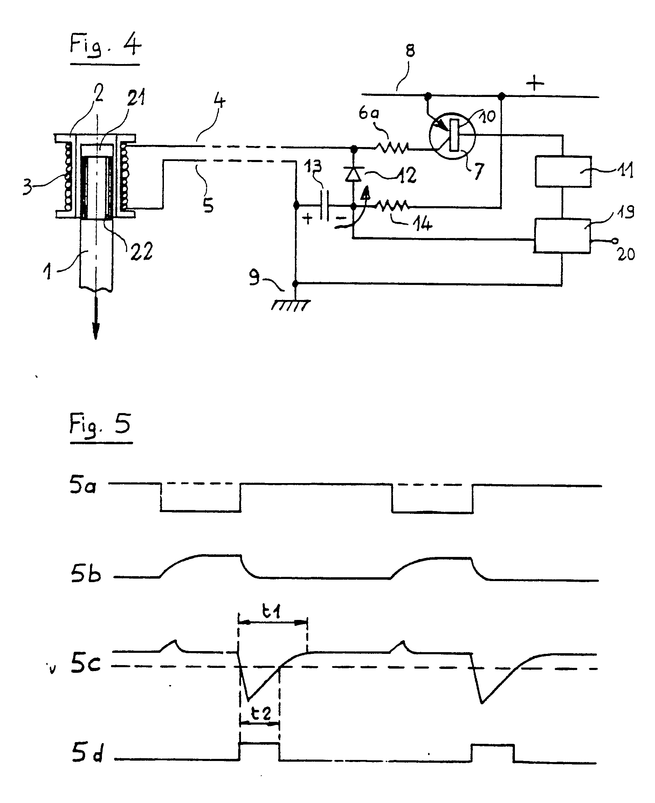

La figure 4 est une variante de réalisation de la figure 1 dans laquelle les positions de la diode 12 et du condensateur 13 ont été permutées, la résistance de décharge 14 étant connectée non plus à la masse 9 mais à la ligne positive 8.

On recueille maintenant une tension négative sur l'anode de la diode 12 au moment de la coupure du courant dans la bobine 3.

Le condensateur 13 se charge donc à une tension plus négative que la masse 9. Cette charge décroît progressivement sous l'action de la résistance 14 connectée à la ligne positive 8. Au bout d'un temps t1 la tension se stabilise à un niveau légèrement positif égal au seuil de conduction de la diode 12 comme indiqué sur la courbe 5c figure 5.

Les signaux appliqués à la base 10 sont ceux de la courbe 5a, tandis que le courant dans la bobine est celui de courbe 5b ces sionaux étant les mêmes que ceux représentés en 2a et 2b figure 1.

Avant affichage de la mesure correspondant au temps t1 l'appareil indicateur 19 réglé pour détecter un niveau de tension nulle, produit en son sein des signaux normalisés de durée t2 conformes à la figure 5d. Ce détecteur 19 peut être un simple comparateur de tension. Les temps t1 et t2 dépendent de la charge du condensateur 13 donc de la position relative des pièces 1 et 2. Le signal est recueilli sur la borne 20.

A titre d'exemple de réalisation non limitatif de la portée de l'invention le noyau mobile 1 a été réalisé (fig. 4) à partir d'une pièce en plastique moulé 21 sur laquelle a été enroulé et collé un ruban métallique mince et à haute perméabilité magnétioqe 22 ce mode de réalisation étant moins fragile mécaniquement que le précédent.

Ce ruban métallique 22 peut être un métal classique à base de nickel ou un métal amorphe dit verre métallique. Il peut y avoir plusieurs spires séparées par un matériau isolant.

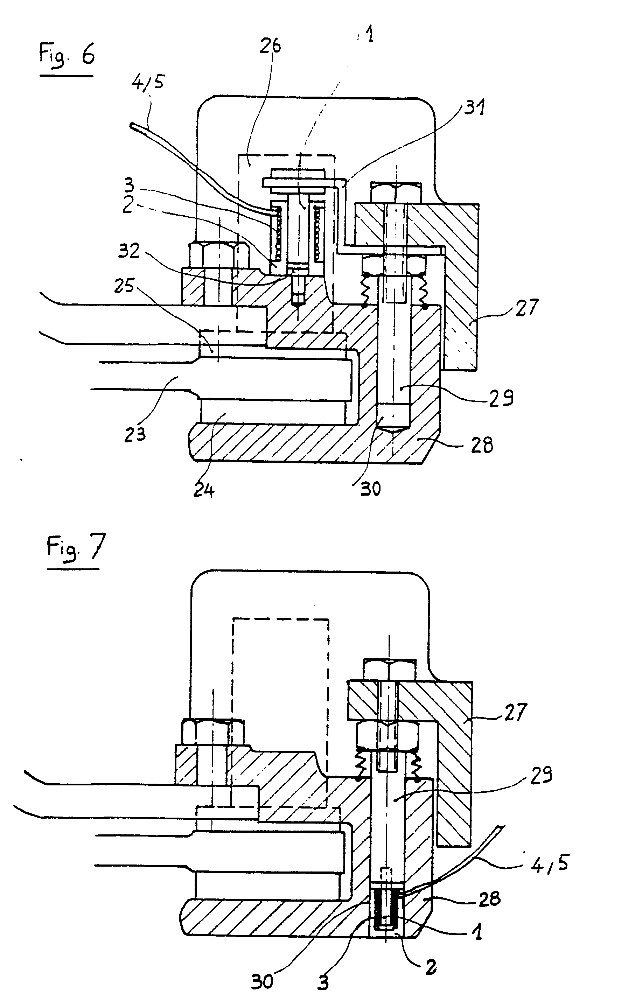

La figure 6 est une vue en coupe d'un dispositif selon l'invention monté sur un frein à disque de véhicule automobile.

Le disque de frein 23 peut être serré entre deux garnitures 24 et 25 sous l'action d'un piston 26, les pièces 27 et 28 prenant entre elles une position représentative de l'épaisseur d'au moins une des garnitures 24 et 25.

Une tige de guidage 29 solidaire de la pièce 27 (étrier) et pénétrant avec un faible jeu dans l'alésage 30 de la pièce 28 (chape) évite un glissement intempestif des pièces 27 et 28.

Le noyau 1 est fixé par une patte 31 à la pièce 27, tandis que le support 2 de la bobine 3 est fixé par un clou 32 à la pièce 28.

Le déplacement de la pièce 27 par rapport à la pièce 28 entraîne le déplacement du noyau 1 par rapport à la bobine 3 et donc une variation d'inductance mesurable par différence de tension ou de temps.

La figure 7 est une variante de réalisation dans laquelle le noyau 1 a été placé à l'extrémité de la tige de guidage 29 tandis que la bobine 3 et son support 2 ont été placés dans l'alésage 30. S'il y a lieu, la bobine 3 et le noyau 1 peuvent être placés au delà de cet alésage 30, dans son prolongement.

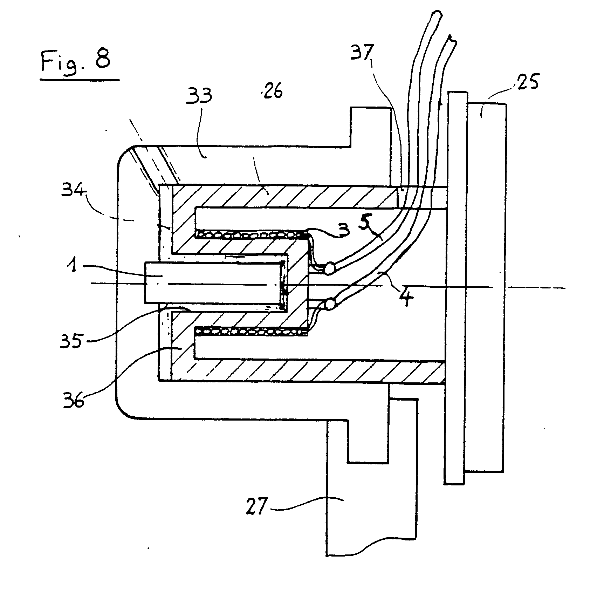

La figure 8 est une autre variante de réalisation dans laquelle le noyau 1 et la bobine 3 ont été placés à l'intérieur du cylindre récepteur de frein 33 fixé sur la pièce 27 (étrier), le noyau 1, entouré par le liquide de frein 34 est collé ou serti dans le cylindre 33 tandis que la bobine 3 est surmoulée dans l'épaisseur du renfoncement 35 de la tête 36 du piston 26 dans lequel pénètre le noyau 1. Ce piston 26 exécuté de préférence dans un matériau non magnétique qui peut être de la bakélite ou un matériau similaire, appuie sur la garniture de frein 25. Une échancrure 37 sur le bord du piston 26 permet le passage des fils de liaison 4 et 5.

Cette disposition permet de protéger parfaitement l'ensemble bobine 3 noyau 1 des projections de pierres, de la glace etc... qui pourraient les endommager. Elle permet en outre, de mesurer la somme des usures des deux garnitures de frein 25 et 24.

Les exemples indiqués ne sont pas limitatifs de la portée de l'invention, le noyau 1 pouvant être par exemple un noyau plat se déplacant devant une ou deux bobines également plates, réalisées en circuit imprime.

Des valeurs numériques correspondant à la figure 1 peuvent être à titre d'exemple les suivantes diamètre de noyau 5 à 6 mm, longueur de bobine 15 mm, nombre de spires en fil de 0,1 mm 120, capacité du condensateur 13 : 10 nanofarads, tension d'alimentation sur la ligne 8 : 5 volts, tension recueillie aux bornes du condensateur 13 variant de 1 à 4 volts, pour un courant stabilisé dans la bobine 3 de l'ordre de 0,02 ampères.

Ce capteur très simple délivre donc des signaux importants faciles à exploiter.

Les polarités portées sur le condensateur 13, figures 1 et 4, sont celles qui existent après transfert de l'énergie de la bobine 3 dans le condensateur 13.

## Revendications

1. Dispositif de détection de la position d'une pièce mécanique par rapport à une autre, du type dans lequel un noyau magnétique (1) fixé à l'une des pièces (27) pénètre dans une bobine (3) attachée à l'autre pièce (28) caractérisé en ce qu'il est prévu des moyens (7, 11) de faire circuler un courant constant stabilisé dans la bobine (3), de la couper et de recueillir dans un condensateur (13) l'énergie précédemment emmagasinée dans la bobine (3) en faisant passer le courant à travers une diode (12) placée en série avec la bobine (3) et le condensateur (13).

2. Dispositif selon la revendication 1 caractérisé en ce qu'une résistance (6a) de forte valeur est placée en série avec les moyens (7, 11) de circulation de courant et la ligne d'alimentation (8).

3. Dispositif selon l'une quelconque des revendications 1 ou 2 caractérisé en ce que la tension lentement variable représentative de la mesure est prélevée au point de fonction entre la cathode de la diode (12) et le condensateur (13) par rapport à la masse (9), une résistance (14) en parallèle sur la diode (12) assurant la décharge du condensateur (13).

4. Dispositif selon l'une quelconque des revendications 1 ou 2 caractérisé en ce que la tension représentative de la mesure est prélevée au point commun entre l'anode de la diode (12) dont la cathode est reliée à la bobine (3) et l'une des armatures du condensateur (13) dont l'autre armature est reliée à la masse (9), une résistance (14) connectée au même point étant reliée par son autre extrémité à une ligne de tension continue (8) de polarite opposée à la tension de charge du condensateur (13) et en ce qu'il est prévu des moyens (19) permettant d'obtenir un signal électrique représentatif de la durée pendant laquelle la tension de charge du condensateur (13) est plus grande qu'une valeur prédéterminée.

5. Dispositif selon l'une quelconque des revendications 1 à 4 caractérisé en ce que le noyau magnétique (1) est constitué d'un cylindre en ferrite de baryum ou un matériau similaire.

6. Dispositif selon l'une quelconque revendications 1 à 4 caractérisé en ce que le noyau magnétique (1) est constitué d'un ruban métallique magnétique (22) enroulé autour d'un support non magnétique et isolant (21).

7. Dispositif selon la revendication 6 caractérisé en ce que le ruban métallique (22) est constitué d'un métal amorphe dit verre métallique.

8. Dispositif selon l'une quelconque des revendications 1 à 7 caractérisé en ce que les pièces (27, 28) dont la position relative est à mesurer sont des pièces de véhicule dont la distance varie avec l'usure d'es garnitures de frein.

9. Dispositif selon l'une quelconque des revendications 1 à 8 caractérisé en ce que le noyau mobile (1) ou la bobine (3) sont solidaires soit de la pièce (27) qui est un étrier de frein, soit de la pièce (28) qui en est la chape.

10. Dispositif selon la revendication 9 caractérisé en ce que le noyau mobile (1) est solidaire d'une des tiges de guidage (29) de l'étrier de frein (27), la bobine (3) étant de son côté solidaire de la chape (28) à l'intérieur de l'alésage de guidage (30) ou dans le prolongement de celui-ci.

11. Dispositif selon l'une quelconque des revendications 1 à 8 caractérisé en ce que le noyau (1) et la bobine (3) aont placés à l'intérieur d'un cylindre récepteur de frein (33) fixé mécaniquement sur l'étrier (27).

12. Disposition selon la revendication 11 caractérisé en ce que le noyau (1) est fixé sur le cylindre récepteur (33), tandis que la bobine (3) est placée dans l'épaisseur d'un renfoncement (35) de la tête (36) du piston (26) appuyant sur les garnitures (24 et 25), le noyau (1) plongé dans le liquide de frein (34) pénétrant à l'intérieur du renfoncement (35).

## Patentansprüche

1. Vorrichtung zur Ermittlung der Position eines mechanischen Teils bezüglich eines anderen, wobei ein an einem der Teile (27) befestigter magnetischer Kern (1) in eine Spule (3) eintaucht, die am anderen Teil (28) befestigt ist, dadurch gekennzeichnet, daß eine Anordnung (7, 11) vorgesehen ist, um einen stabilisierten konstanten Gleichstrom in der Spule (3) fließen zu lassen, um vorher gespeicherte Energie in der Spule (3) abzuleiten und in einen Kondensator (13) aufzunehmen, in dem der Strom eine Diode (12) durchfließt, die in Serie mit der Spule (3) und dem Kondensator (13) geschaltet ist.

2. Vorrichtung nach Anspruch 1, dadurch gekennzeichnet, daß ein Widerstand (6a) großen Wertes in Serie mit der Anordnung (7, 11) für den Stromfluß und die Versorgungsleitung (8) geschaltet ist.

3. Vorrichtung nach einem der Ansprüche 1 oder 2, dadurch gekennzeichnet, daß die langsam variable, den Meßwert darstellende Spannung an der Verbindungsstelle zwischen der Kathode der Diode (12) und dem Kondensator (13) bezüglich der Masse (9) abgegriffen wird, wobei ein zur Diode (12) paralleler Widerstand (14) das Entladen des Kondensators (13) gewährleistet.

4. Vorrichtung nach einem der Ansprüche 1 oder 2, dadurch gekennzeichnet, daß die den Meßwert darstellende Spannung am gemeinsamen Punkt zwischen der Anode der Diode (12), deren Kathode mit der Spule (3) verbunden ist, und an einem der Anschlüsse des Kondensators (13) abgegriffen wird, dessen anderer Anschluß mit der Masse (9) verbunden ist, wobei ein Widerstand (14), der mit demselben Punkt verbunden ist, mit seinem anderen Ende mit einer Gleichspannungsleitung (8) verbunden ist, deren Polarität entgegengesetzt zur Ladespannung des Kondensators (13) ist und daß eine Anordnung (19) vorgesehen ist, um ein elektrisches Signal zu erhalten, das der Dauer entspricht, während der die Ladespannung des Kondensators (13) größer ist als ein vorgegebener Wert.

5. Vorrichtung nach einem der Ansprüche 1 bis 4, dadurch gekennzeichnet, daß der magnetische Kern (1) aus einem Zylinder aus Bariumferrit oder dgl. besteht.

6. Vorrichtung nach einem der Ansprüche 1 bis 4, dadurch gekennzeichnet, daß der magnetische Kern (1) aus einem magnetischen metallischen Band (22) besteht, das um eine isolierende nicht magnetische Halterung (21) gewickelt ist.

7. Vorrichtung nach Anspruch 6, dadurch gekennzeichnet, daß das metallische Band (22) aus einem als metallisches Glas bezeichneten amorphen Metall besteht.

8. Vorrichtung nach einem der Ansprüche 1 bis 7, dadurch gekennzeichnet, daß die Teile (27, 28), deren Relativstellung zu messen ist, Kraftfahrzeugteile sind, deren Abstand sich mit der Abnutzung der Bremsbeläge ändert.

9. Vorrichtung nach einem der Ansprüche 1 bis 8, dadurch gekennzeichnet, daß der bewegliche Teil (1) oder die Spule (3) entweder mit dem Teil (27), d.h. einem Bremssattel oder mit dem Teil (28), d.h. mit einem Gehäuse verbunden sind.

10. Vorrichtung nach Anspruch 9, dadurch gekennzeichnet, daß der bewegliche Kern (1) mit einem der Führungsstifte (29) des Bremssattels (27) verbunden ist und die Spule (3) mit dem Gehäuse (28) verbunden ist im Inneren der Führungsbohrung (30) oder in deren Verlängerung.

11. Vorrichtung nach einem der Ansprüche 1 bis 8, dadurch gekennzeichnet, daß der Kern (1) und die Spule (3) im Inneren eines Brems-Aufnahmezylinders (33) angeordnet sind, der mechanisch mit dem Bremssattel (27) verbunden ist.

12. Vorrichtung nach Anspruch 11, dadurch gekennzeichnet, daß der Kern (1) am Aufnahmezylinder (33) befestigt ist, während die Spule (3) in der Wand einer Verstärkung (35) des Kopfes (36) des Kolbens (26) angeordnet ist, der die Beläge (24 und 25) beaufschlagt, wobei der Kern (1), der in die Bremsflüssigkeit (34) eintaucht, in das Innere der Verstärkung (35) eindringt.

**Claims**

1. Apparatus for detecting the position of one mechanical member with respect to another, of the type in which a magnetic core (1) which is fixed to one of the members (27) engages into a coil (3) which is attached to the other member (28) characterised in that there are provided means (7, 11) for passing a stabilised direct current through the coil (3), for cutting it off, and for collecting in a capacitor (13) the energy previously stored in the coil (3) by passing the current through a diode (12) connected in series with the coil (3) and the capacitor (13).

2. Apparatus according to claim 1 characterised in that a high-resistance resistor (6a) is connected in series with the means (7, 11) for producing the flow of current and the feed line (8).

3. Apparatus according to either one of claims 1 and 2 characterised in that the slowly variable voltage which is representative of the measurement is taken off at the junction between the cathode of the diode (12) and the capacitor (13) with respect to earth (9), a resistor (14) in parallel with the diode (12) providing for discharging of the capacitor (13).

4. Apparatus according to either one of claims 1 and 2 characterised in that the voltage which is representative of the measurement is taken off at the common point between the anode of the diode (12) whose cathode is connected to the coil (3) and one of the plates of the capacitor (13) of which the other plate is connected to earth (9), a resistor (14) connected to the same point being connected by way of its other end to a dc voltage line (8) of opposite polarity to the charging voltage of the capacitor (13) and that there are provided means (19) for producing an electrical signal representative of the period for which the charging voltage of the capacitor (13) is greater than a predetermined value.

5. Apparatus according to any one of claims 1 to 4 characterised in that the magnetic core (1) is formed by a cylinder of barium ferrite or a similar material.

6. Apparatus according to any one of claims 1 to 4 characterised in that the magnetic core (1) is formed by a megnetic metal strip (22) which is wound around a non-magnetic and insulating carrier (21).

7. Apparatus according to claim 6 characterised in that the metal strip (22) is formed of an amorphous metal referred to as metallic glass.

8. Apparatus according to any one of claims 1 to 7 characterised in that the members (27, 28) whose relative position is to be measured are vehicle components whose spacing varies with the amount of wear of the brake linings.

9. Apparatus according to any one of claims 1 to 8 characterised in that the movable core (1) or the coil (3) are fixed either with respect to the member (27) which is a brake caliper or the member (28) which is the yoke thereof.

10. Apparatus according to claim 9 characterised in that the movable core (1) is fixed with respect to one of the guide rods (29) of the brake caliper (27), the coil (3) in turn being fixed with respect to the yoke (28) within the guide bore (30) or in line therewith.

11. Apparatus according to any one of claims 1 to 8 characterised in that the core (1) and the coil (3) are disposed within a brake actuating cylinder (33) which is mechanically fixed to the caliper (27).

12. Apparatus according to claim 11 characterised in that the core (1) is fixed on the cylinder (33) while the coil (3) is disposed in the thickness of a recess (35) on the head (36) of the piston (26) bearing against the linings (24 and 25) and the core (1) which is immersed in the brake liquid (34) extends into the recess (35).

Fig. 1

Fig. 2

Fig. 3

1

Fig. 4

Fig. 5

Fig. 6

Fig. 7

Fig. 8

33    26    37    25

34

1

35

36

27